# EUROPEAN PATENT APPLICATION

(11) **EP 3 868 819 A1**
(43) Date of publication of application: **25.08.2021**
(21) Application number: 21158501.3
(22) Date of filing: 22.02.2021
(51) Int. Cl.: C08K 3/04

(54) **INJECTED POLYMERIC COMPOSITE MATERIAL, METHODS AND USES THEREOF**

(30) Priority: 21.02.2020 PT 2020116129
(71) Applicant: CENTITVC - Centro de Nanotecnologia e Materiais Tecnicos, Funcionais e Inteligentes, 4760-034 Vila Nova de Famalicão (PT); Simoldes Plásticos, SA, Apartado 113 Oliveira de Azeméis (PT)
(72) Inventor: BRAZ LOPES, Maria João, 4760-034 Vila Nova de Famalicão (PT); SILVESTRE MENDES PINTO DE MOURA, Bruna Gabriela, 4760-034 Vila Nova de Famalicão (PT); MAGALHÃES RIBEIRO DA CUNHA MELO, Sandra Rafaela, 3721-902 Oliveira de Azemis (PT); COSTA ALPOIM MENEZES, Dânia Catarina, 4760-034 Vila Nova de Famalicão (PT)
(74) Representative: Patentree

(57) **Abstract**

The present disclosure relates to an injected polymeric composite material, methods and uses thereof. The injected polymeric composite comprises a polymeric substrate and a thermal conductive additive. The injected polymeric composite of the present disclosure has a chrome appearance without using chromium and high performance in thermal tactile sensation, producing an enhanced cool touch when compared with a standard plastic. The present disclosure also relates to moulded articles comprising the injectable mouldable material, such as automotive parts, electric home appliances, holder or door handlers.

## Description

### TECHNICAL FIELD

The present disclosure relates to an injected polymeric composite material, methods and uses thereof. The new injected polymeric composite of the present disclosure has a chrome appearance without using chromium and high performance in thermal tactile sensation, producing an enhanced cool touch when compared with a standard plastic.

### BACKGROUND

The industry of interior components for the automotive has been paying attention to the latest trends, such as the metallic effects of components from the door panels, dashboards, consoles, among others. In fact, this typology of components is increasingly desired by the end consumer.

However, coupled with these aesthetic features, this industry is also concerned to answer to the latest European laws and regulations that aim to promote the ecology and sustainability of the automotive industry by applying stringent limits that should be considered. These include reducing fuel consumption and greenhouse gas/CO₂ emissions, but also the abolishment of hexavalent chromium use, as stated on the Directive 2000/53/EC.

For this reason, it is necessary to significantly change the finishing process of metal appearance for aesthetic purposes in the automotive industry. One way is replacing chromium as the base material used in this process, devolving environmentally friendly and efficient finishing technologies, choosing materials with well-defined life cycles and with end-of-life processing that are not demanding, and capable of eliminating environmentally harmful waste and consequently CO₂ emissions.

Hexavalent chromium, used in the finishing processes of plastic parts to obtain a metallic effect, is a heavy metal with several hazards associated with the environment and health. This material has been identified as being carcinogenic to humans, especially as a result of prolonged inhalation exposure, and may cause various allergic reactions in contact with skin.

In this regard, in most of the original equipment manufacturers (OEMs), plastics are replacing all the metal components, due to their lower weight. However, this solution still presents the drawback of missing the cool touch that metals have at room temperature. Thus, solutions to find a new chrome-like substitute should go beyond the appearance of the final piece, considering as well, its final thermal tactile sensation.

These facts are disclosed in order to illustrate the technical problem addressed by the present disclosure.

### GENERAL DESCRIPTION

The present solution relates to an innovative polymer-based solution with chrome appearance (metallic) without using chromium or any of its derivatives, to produce plastic components for automotive interiors. The material of the present subject-matter responds to the European directive which prohibits the use of Hexavalent Chromium on vehicles production. Also, this solution allows to maintain a cool metallic sensation upon touch, rendering the final piece much more alike to their metallic counterparts.

This efficient technology enables the possibility to operate in the absence of chromium, thus having important advantages in terms of environmental sustainability safety of company employees, as they do not have to be in contact with this harmful substance. Additionally, the chrome effect is still very appealing to customers, since this innovation eliminates the chromium use, but maintains its aesthetics.

The material of the present subject-matter is a new functional polymeric composite comprising embedded materials of high thermal effusivity, combined with chromium-free coatings. These are applied using more sustainable and ecological technologies, resulting in plastic-based substrates with chrome visual effect and cool touch. This was achieved via extrusion processes, to obtain the new functional composites, followed by injection moulding and spray coating processes to obtain the final parts.

The material of the present subject-matter distinguishes itself from other products as it aligns the aesthetics and/or decorative effect to the functionality, allowing an improvement of the interaction experience between the user and the interior components of the vehicles.

The main challenges that the material of the present subject-matter addresses are:
(i) health and environmental safety of metalized components - hexavalent chromium, used in different stages of finishing plating processes to obtain a metallic effect, is a heavy metal with several hazards associated with the environment and health. Exposure to hexavalent chromium may occur through inhalation, skin contact and ingestion. This material has been identified as being carcinogenic to humans, especially because of prolonged inhalation exposure, and may cause various allergic reactions in contact with skin. For the reasons given above, any process that enables the possibility to operate in the absence of chromium will have an added-value for the health of company employees, who will not have to be in contact with this harmful substance.
(ii) replacement of metal by plastic components - a tendency for most of the OEMs is the use of plastics to replace all the metal components, mostly due to their lower weight. Apart from the advantages in terms of energy consumption, one big challenge is related to the thermal sensation perceived by the users. In fact, plastics can have the same aesthetics but lack the same cool touch as metals at room temperature.

Surprisingly, the material of the present subject-matter addresses those challenges by providing, by one side, a metallized look with chrome effect without using any chromium but that is still very appealing to customers, maintaining its aesthetics and by the other side, a solution with enhanced cool touch when compared with a standard plastic.

Therefore, the material of the present subject-matter is considered radical since is chromium free, using sustainable technologies, and answers to the both sensorial characteristics identified.

The material of the present subject-matter may be applied on the international market, in different vehicles/OEMs or other products from other markets like childcare articles, for instance. It is then expected that the present solution will bring significant added value that could result in new markets, by developing products with sensory characteristics (visual and touch), appealing to other types of application that are not related to the automotive area.

In this way, this innovative solution, besides the automotive interior components, will have in the future a significant impact in other mobility sectors and areas where injection moulded parts are used as architecture and interior decoration or other emerging areas of international interest.

This new solution comes to fulfil the gap identified with respect to a market need that is a safe and sustainable solution, chrome plated effect that combines sensory features, as aesthetics and touch, for interior automotive components.

In fact, this solution could be applied in a new range of products in distinct areas:
- elimination of the materials and raw materials that are toxic for the environment and human being;
- using of clean and sustainable technologies for the implementation of aesthetics features with a cool touch.

This new solution has a big relevance not only in automobile and transport sectors but also on other markets.

In an embodiment, the present disclosure relates to injected polymeric composite material comprising a substrate comprising 50-80% (w/w) of an injected co-polymer, wherein the co-polymer comprises polypropylene, polyamide, polycarbonate or acrylonitrile butadiene styrene, or mixtures thereof; mixed with 20-50% (w/w) of a thermal conductive additive, wherein the additive is selected from carbon-based additives, ceramic-based additives, or mixtures thereof, preferably selected from the following list: carbon nanotubes, graphite, boron nitride, or mixtures thereof; and a chrome effect coating layer over the injected substrate, wherein the chrome effect coating layer is selected from list of: lacquer coating, paint coating, physical vapour deposition of aluminium particles, or combinations thereof.

In an embodiment, the density of the injected polymeric composite material at 20 °C is from 1000-1410 Kg m⁻³, preferably 1000-1100 Kg m⁻³.

In an aspect of the present disclosure, the effusivity of the injected polymeric composite material is at least 600 W s^{1/2}/m² K, preferably 900-1050 W s^{1/2}/m² K.

In an embodiment, the substrate polymer is selected from: polyamide, polycarbonate or acrylonitrile butadiene styrene, or mixtures thereof.

In an embodiment, the carbon-based additive or ceramic additive is selected from: graphite, boron nitrate, or mixtures thereof.

In an embodiment, the substrate of the injected polymeric composite material comprises: 50-80% (w/w) of co-polymer, preferably 60-80 % (w/w); and 20-50% (w/w) of thermal conductive additive, preferably 20-40% (w/w).

In an embodiment, the co-polymer is selected from polypropylene, polyamide, polycarbonate, or mixtures thereof. In a further embodiment, the co-polymer is polyamide. In a yet another embodiment, the co-polymer is polypropylene.

In an embodiment, the thermal conductive additive is a carbon-based additive. In a further embodiment, the thermal conductive additive is selected from graphite, carbon nanotubes, or mixtures thereof.

In an embodiment, the thermal conductive additive is a ceramic-based additive. In a further embodiment, the thermal conductive additive is boron nitride.

In an embodiment, the chrome effect coating layer comprises sublayers, preferably primer, basecoat, chrome effect and topcoat sub-layers.

In another embodiment, the coating layer does not contain chromium, particularly hexavalent chromium.

The present disclosure also relates to a moulded article comprising the injectable polymeric composite material described in any of the previous embodiments. In an embodiment, the moulded article is a decor component of a car, particularly a decor component of the interior door trim, car pillar, floor or roof, car console, instrument panel, glove box compartment, and/or trunk; a component of a baby seat car; or an electric home appliance, a holder, or a door handler.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of the extrusion process to obtain the new functional polymer used to produce moulded objects with high thermal effusivity.
**Figure 2****:** Schematic representation of an embodiment of the injection process to obtain moulded objects with high thermal effusivity.

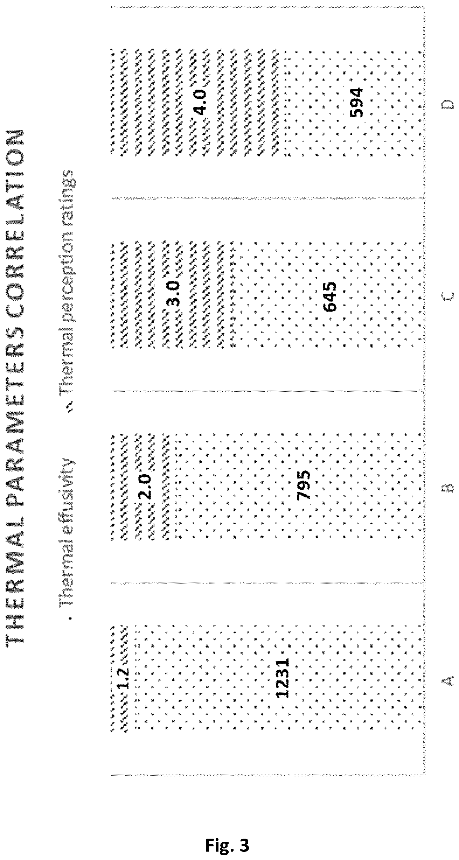

**Figure 3****:** Schematic representation of an embodiment of the correlation between variables "Thermal perception" and "Thermal effusivity". The thermal perception values are obtained with a sensory analysis made with 40 volunteers. The perception scale varies from 1 to 4, where 1 is the cooler substrate and 4 is the less cool substrate. The thermal effusivity determinations were made using an MTPS (Modified Transient Plane Source) instrument. The negative coefficient correlation obtained (R = - 0,91) between thermal perception mean ratings and thermal effusivity mean values indicates as thermal perception rating increases, thermal effusivity decreases. A = polypropylene loaded with 20% of a carbon-based additive as graphite; B = polypropylene loaded with a ceramic additive as boron nitride; C = polypropylene loaded with 6% of a carbon-based additive as graphite; D = polypropylene with no additives loaded.
**Figure 4****:** Schematic representation of an embodiment of thermal effusivity values obtained for different functional polymeric composites, and its respective increment when compared to a polymer based with no additives loaded.
**Figure 5****:** Schematic representation of an embodiment of density values obtained for different functional polymeric composites, and its respective increment when compared to a polymer based with no additives loaded.

### DETAILED DESCRIPTION

The present innovation relates to an injected polymeric composite material comprising a substrate comprising an injected co-polymer.

The co-polymer comprises polypropylene (PP) or polyamide (PA) or other co-polymers as polycarbonate (PC) or acrylonitrile butadiene styrene (ABS).

**Table 1 - Main properties of the selected polymers (from technical data sheets).**

| Co-polymers | Density (g/cm³) | Melt Volume rate (cm³/ 10 min) | Processing temperature (°C) | Viscosity |
|---|---|---|---|---|
| Polypropylene | 0.90 | 21 (230 °C/2.16 Kg) | 230 | - |
| Polyamide | 1.11 | - | 250 - 270 | medium |
| ABS | 1.19 | | | - |
| PC/ABS blend | 1.19 | 21 (260°C/5 Kg) | 260 - 280 | - |

After an exhausting research of materials suitable as additives for thermal conductivity and effusivity it was found that the most common are carbon-based, ceramics or metals (Table 2).

**Table 2 - Thermal conductivity of common thermal conductive additives**

| Additive | Chemical nature | Thermal Conductivity w/(mK) |
|---|---|---|
| Carbon nanotubes | Carbon-based | 1000-4000 |
| Graphene | Carbon-based | 2000-6000 |
| Graphite | Carbon-based | 100-400 |
| Boron Nitride | Ceramic | 185-300 |
| Silicon Carbide | Ceramic | 120 |
| Aluminium | Metal | 234 |
| Copper | Metal | 386 |

The co-polymers are mixed with selected carbon-based or ceramic additives or combinations thereof. In an embodiment, the additives can be selected from a list comprising: graphite, boron nitride, or mixtures thereof.

In an embodiment, mixtures containing different polymers and thermal conductive additives were prepared as described in Table 3:

**Table 3 - Embodiment of injected polymeric composites**

| Formulation | Co-polymer | Thermal conductive additive | Mass Ratio (polymer:additive) |
|---|---|---|---|
| A | PP | Graphite/Carbon nanotubes | 80:20 |
| B | PP | Boron nitride | 60:40 |
| C | PP | Graphite/Carbon nanotubes | 94:6 |
| D | PP | - | - |

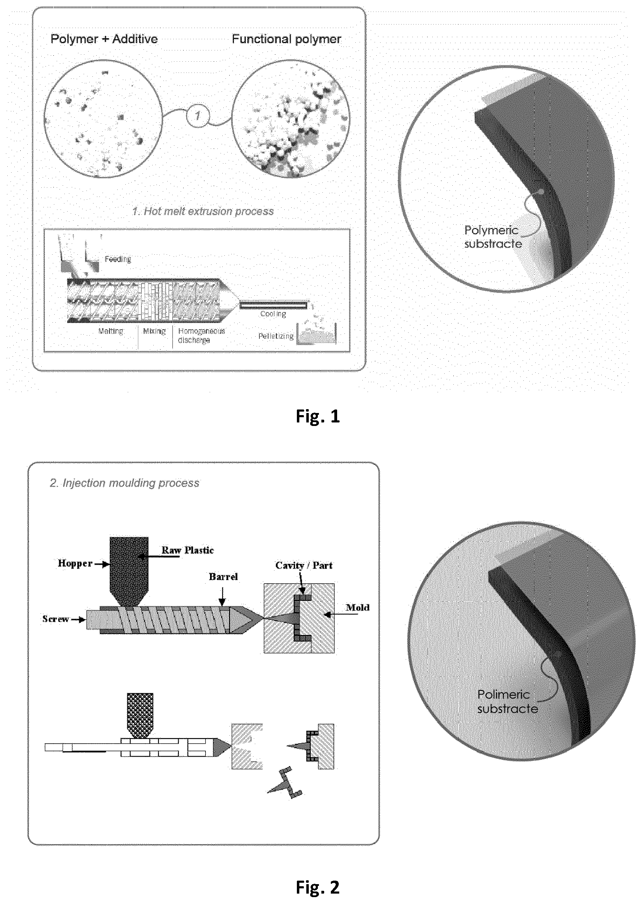

In an embodiment, the mixtures are obtained by extrusion processes of the co-polymer mixed with a thermal conductive additive, through a twin-screw extruder with 4 distinct zones of heating and a temperature profile between 175 - 220 °C; and an extrusion speed between 50 - 300 RPM (Figure 1). The obtained mixtures are then molded into articles, such as automotive parts, by injection processes through an injection machine with 5 distinct zones of heating and L/D ratio of 21/1. The injection parameters are dependent and should be adapted in function of the used mixture and final mould.

In an embodiment, the metallic chromium effect is achieved by applying a chrome effect coating layer over the injected substrate, wherein the chrome effect coating comprises technologies as Physical Vapour Deposition technologies (PVD) of Aluminium nanoparticles or through multilayer systems applied by spray coating.

In an embodiment, the chrome effect coating used in the present disclosure comprises a multilayer system of coatings denominated Berlac Chrome Reflexion®, usually composed of the following layers:
a) two component polyurethane-based primer (usually black or grey) with high specular reflection (mirror effect) and adaptable in function of the polymer's substrate
b) two component base coat Chrome reflection effect layer (usually this layer consists of a formulation grey metallic particles)
c) two component polyurethane-based transparent top coat adjustable for high reflection, semi-reflection or matt effect.

As a complementary analysis and to be possible to evaluate expeditiously the produced injectable compositions in terms of cold touch, it was made a correlation analysis between a qualitative parameter - thermal perception, and quantitative parameter known to be relatable to thermal touch sensation - thermal effusivity. For this purpose, a polypropylene co-polymer was mixed by extrusion processes, with carbon-based additives as graphite or carbon nanotubes (A and C from Fig 3) and ceramic additives as boron nitride (B from Fig. 3) to enhance the standard thermal effusivity values of the polypropylene co-polymer.

The moulded plates without painting were analysed in terms of thermal touch perception and quantitative thermal parameters as thermal effusivity (W s^{1/2} / m² K), and density (Kg/m³) to evaluate the additive effect on these key properties.

The thermal perception values are obtained with a sensory analysis made with 40 volunteers. The perception scale varies from 1 to 4, where 1 is the cooler substrate and 4 is the less cool substrate.

The thermal effusivity determinations were made using an MTPS (Modified Transient Plane Source) instrument.

In Fig 3 it is presented the results obtained in terms of thermal perception mean ratings and thermal effusivity values, respectively A= 1.2 and 1231 W s^{1/2}/ m² K; B= 2.0 and 795 W s^{1/2}/m² K; C = 3.0 and 645 W s^{1/2}/m² K; D= 4.0 and 594 W s^{1/2}/m² K (which corresponds to the co-polymer polypropylene without any additive).

As mentioned, these results were used to find a correlation between thermal perception mean ratings and thermal effusivity mean values. It was obtained a negative coefficient correlation: R = - 0.91, that indicates as thermal perception rating increases, thermal effusivity decreases.

These results show that the developed solutions are capable of produce a cool touch sensation to the user, and the thermal perception ratings are correlatable to the thermal effusivity values, and the thermal effusivity parameter is a good indication of warmth/cool perception.

The following example illustrates several embodiments of the present disclosure:

### EXAMPLE:

A polyamide co-polymer used as polymer matrix was extruded with 20% (w/w) of graphite as an additive.

To produce 15 kg of the previous mixture:
i) The polyamide grains were dried during a minimum period of 4h at 80 °C;
ii) 3 kg of graphite additive (Ash (%) ≥ 0.3; Density = 0.15 g/cm³; Form - soft granules) were weighed and added to 12 kg of the polyamide co-polymer.

It was used a powder and pellets volumetric feeding to supply a certain volume of material per unit of time and obtain the defined relation in function of the density of the polyamide and the additive. Table 4 describes the conditions used for the extrusion process.

**Table 4 - Extrusion process conditions used for PA grains and 20% of Graphite powder**

| Extrusion temperatures (°C) | | | | | Torque (%) | RPM | P (bar) |
|---|---|---|---|---|---|---|---|
| Die | Zone 4 | Zone 3 | Zone 2 | Zone 1 | | | |
| 220-260 | | | | | 35-40 | 250-300 | 17-18 |

After the extrusion process, the obtained new raw material in grains form, was used to obtain automotive interior parts, specifically door trims. It was also obtained moulded test plates to measure the key properties of this invention namely the density and the thermal effusivity following the standard DIN EN ISO 1183-1:2019 and MTPS (Modified Transient Plane Source) method, using a C-Therm TCi Thermal Analyzer, respectively. To inject the extruded new raw material in moulded door trims, it was used an injection moulding machine with 5 distinct zones of heating and L/D ratio of 21/1, and a door trim mould under the conditions presented on table 5. Before the injection process the material was dried during 4h at 80 °C.

**Table 5 - Injection Moulding process conditions used for a PA loaded with 20% of graphite powder**

| Mould temperature (°C) | Injection temperatures (°C) | | | | | | Injection speed (mm/s) | P (bar) |
|---|---|---|---|---|---|---|---|---|
| | Injection nozzle | Z1 | Z2 | Z3 | Z4 | Z5 | | |
| 60 - 90 | 250 - 270 | | | | | | 55 | 1000 |

It should be noticed that these conditions are only suitable for the predefined mixture. When using other polymers and additives in different ratios and moulds, both extrusion and injection conditions shall be adapted.

Before the coating application, the substrates where were pre-conditioned during 7 days at a temperature of 23 °C and a Relative humidity of 55 % and then manually degrease with alcohol and flamed.

Both obtained plates and automotive parts were painted with the chrome effect paint. Briefly, the chrome effect multilayer system was applied layer by layer by manual spray coating on the injected automotive parts and plates, with a pressure gun with nozzle diameter of 0.85 - 1.5 mm and an air pressure between 3 - 5 bars. For the first layer it was used a nozzle of 1.4 mm and an air pressure of 4.5 bar. It was applied 3 cross coatings. Then, the parts had a 10 min of flash off, which is the necessary waiting time taken to recoat once a first coat is applied on a material, and were dried at 80 °C for 30 min. For the second layer it was used a nozzle of 0.85 mm and an air pressure of 4.5 bar. It was applied 2 cross coatings. After a flash off of 10 min, the parts were dried for 2h at 80 °C. Finally, it was applied the top coat layer with a nozzle of 1.5 mm and an air pressure of 4.5 bar. It was applied 3 cross coatings. After a flash off of 10 min the parts were dried for 2h at 80 °C.

When dried, both plates with and without painting were analysed in terms of thermal effusivity (W s^{1/2}/ m² K) (previously correlated with cool touch perception) and density (Kg/ m³), and colour and gloss for plates with painting.

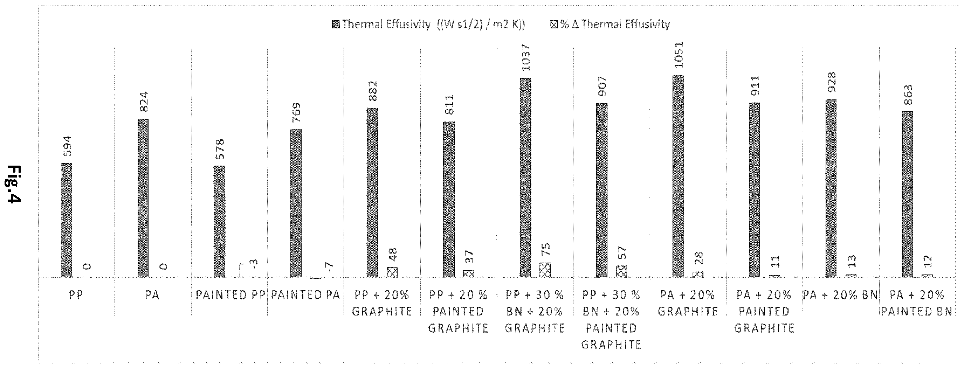

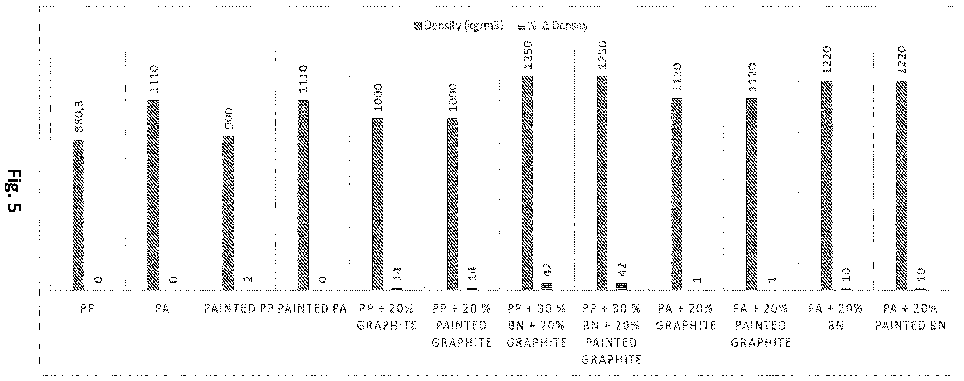

Other mixtures can be developed under the described extrusion and injection processes with similar conditions and evaluated in terms of thermal effusivity (W s^{1/2}/ m² K) and density (Kg/ m³), before and after mix and painting, to estimate the effect of additives and chrome alike painting systems, applied on the injected moulded articles parts, respectively. Also, the colour and gloss are evaluated for the painted substrates. The results for the mentioned example, the respective polymer bases, and other developed composites as:
Polypropylene co-polymer loaded with 20% (w/w) of graphite Polyamide co-polymer loaded with 20% (w/w) of Boron Nitride (Particle size - distribution (µm): d(0.1) = 65-120; d(0.5) = 125 - 190; d(0.9)= 200-300; Bulk density = 0.3 - 0.55 g/ cm³; Surface Area (m²/g) > 3.5);
Polypropylene co-polymer loaded with 20% (w/w) of Graphite and 30% (w/w) of Boron Nitride,
are presented on Figures 4, 5 and the colour and gloss are presented on table 6.

To measure the colour, it is used the colour space which is defined by the International Commission on Illumination (CIE) in 1976. It expresses colour as three values: L* for the for the lightness from black (0) to white (100), a* from green (-) to red (+), and b* from blue (-) to yellow (+).

**Table 6 - Colour Coordinates L* a* b* for an 10° observer, and D65 illuminant, and gloss of PA loaded with 20% (w/w) of graphite plate painted with Berlac® Chrome Reflexion System**

| PA loaded with 20 % of Graphite painted with Berlac Chrome Reflexion System | | | |
|---|---|---|---|
| L* | a* | b* | Gloss (UB (20°)) |
| ≈ 75 | ≈ -0.5 | ≈ 0.3 | 60 - 90 |

This work was developed in the framework of CHROMIUM IP project co-financed by the Operational Programme for Competitiveness and Internationalization (COMPETE 2020), under PORTUGAL 2020 through the European Regional Development Fund (ERDF).

The term "comprising" whenever used in this document is intended to indicate the presence of stated features, integers, steps, components, but not to preclude the presence or addition of one or more other features, integers, steps, components or groups thereof.

Furthermore, it is to be understood that the invention encompasses all variations, combinations, and permutations in which one or more limitations, elements, clauses, descriptive terms, etc., from one or more of the claims or from relevant portions of the description is introduced into another claim. For example, any claim that is dependent on another claim can be modified to include one or more limitations found in any other claim that is dependent on the same base claim.

Where ranges are given, endpoints are included. Furthermore, it is to be understood that unless otherwise indicated or otherwise evident from the context and/or the understanding of one of ordinary skill in the art, values that are expressed as ranges can assume any specific value within the stated ranges in different embodiments of the invention, to the tenth of the unit of the lower limit of the range, unless the context clearly dictates otherwise. It is also to be understood that unless otherwise indicated or otherwise evident from the context and/or the understanding of one of ordinary skill in the art, values expressed as ranges can assume any subrange within the given range, wherein the endpoints of the subrange are expressed to the same degree of accuracy as the tenth of the unit of the lower limit of the range.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

## Claims

1. Injected polymeric composite material comprising:
a substrate comprising 50-80% (w/w) of an injected co-polymer,
wherein the co-polymer comprises polypropylene, polyamide, polycarbonate or
acrylonitrile butadiene styrene, or mixtures thereof; mixed with 20-50% (w/w) of a thermal conductive additive,
wherein the additive is selected from carbon-based additives, ceramic-based additives, or mixtures thereof, preferably selected from the following list: carbon nanotubes, graphite, boron nitride, or mixtures thereof;
and a chrome effect coating layer over the injected substrate, wherein the chrome effect coating layer is selected from list of: lacquer coating, paint coating, physical vapour deposition of aluminium particles, or combinations thereof.

2. Injected polymeric composite material according to the previous claim, wherein density of the injected polymeric composite material at 20 °C is from 1000-1410 Kg m⁻³, preferably 1000-1100 Kg m⁻³.

3. Injected polymeric composite material according to any of the previous claims wherein the effusivity of the injected polymeric composite material is at least 600 W s^{1/2}/m² K, preferably 900-1050 W s^{1/2}/m² K.

4. Injected polymeric composite material according to any of the previous claims wherein the polymer is selected from: polyamide, polycarbonate or acrylonitrile butadiene styrene, or mixtures thereof.

5. Injected polymeric composite material according to any of the previous claims wherein the carbon-based additive or ceramic additive is selected from: graphite, boron nitrate, or mixtures thereof.

6. Injected polymeric composite material according to any of the previous claims wherein the substrate comprises:
50-80% (w/w) of co-polymer, preferably 60-80 % (w/w);
20-50% (w/w) of thermal conductive additive, preferably 20-40% (w/w).

7. Injected polymeric composite material according to any of the previous claims wherein the co-polymer is selected from polypropylene, polyamide, polycarbonate, or mixtures thereof.

8. Injected polymeric composite material according to any of the previous claims wherein the co-polymer is polyamide.

9. Injected polymeric composite material according to any of the previous claims wherein the co-polymer is polypropylene.

10. Injected polymeric composite material according to any of the previous claims wherein the thermal conductive additive is a carbon-based additive.

11. Injected polymeric composite material according to the previous claim wherein the thermal conductive additive is selected from graphite, carbon nanotubes, or mixtures thereof.

12. Injected polymeric composite material according to any of the previous claims wherein the thermal conductive additive is a ceramic-based additive, preferably wherein the thermal conductive additive is boron nitride.

13. Injected polymeric composite material according to any of the previous claims wherein the chrome effect coating layer comprises sublayers; preferably primer, basecoat, chrome effect and topcoat sub-layers, preferably wherein the coating layer does not contain chromium, particularly hexavalent chromium.

14. Moulded article comprising the injectable polymeric composite material described in any of the previous claims.

15. Moulded article according to the previous claim wherein the moulded article is a decor component of a car, particularly a decor component of the interior door trim, car pillar, floor or roof, car console, instrument panel, glove box compartment, and/or trunk; a component of a baby seat car; or an electric home appliance, a holder, or a door handler.
